# EUROPÄISCHE PATENTSCHRIFT

(11) **EP 1 074 130 B1**
(45) Veröffentlichungstag und Bekanntmachung des Hinweises auf die Patenterteilung: **27.12.2006**
(21) Anmeldenummer: 99913066.9
(22) Anmeldetag: 01.02.1999
(51) Int. Cl.: H04L 27/20, H04Q 7/22

(54) **VERFAHREN UND FUNKSTATION ZUR DATENÜBERTRAGUNG**
METHOD AND RADIO STATION FOR DATA TRANSMISSION
PROCEDE ET STATION RADIO POUR LA TRANSMISSION DE DONNEES

(30) Priorität: 11.02.1998 DE 19805546
(43) Veröffentlichungstag der Anmeldung: 07.02.2001
(73) Patentinhaber: SIEMENS AKTIENGESELLSCHAFT, 80333 München (DE)
(72) Erfinder: FÄRBER, Michael, D-82515 Wolfratshausen (DE); SCHREIB, Franz, D-81475 München (DE); LÖCHEL, Norbert, D-81475 München (DE)
(86) Internationale Anmeldenummer: PCT/DE1999/000269
(87) Internationale Veröffentlichungsnummer: WO 1999/041886

(56) Entgegenhaltungen:
- EP-A- 0 360 589
- US-A- 5 712 877
- MURATORE F ET AL: "PERFORMANCE OF GMSK AND COMPARISONS WITH THE MODULATION METHODS OF THE 12PM3 CLASS" WESTERN UNION TECHNICAL REVIEW, Juni 1987 (1987-06), Seiten 246-252, XP000793516

## Beschreibung

Die Erfindung betrifft ein Verfahren und eine Funkstation zur Datenübertragung über eine Funkschnittstelle in einem GSM-Mobilfunksystem.

In der EP 0 360 589 A ist ein Mobilfunksystem beschrieben, bei dem zwischen jeweils zwei normalen AMPS-Kanälen, die eine Bandbreite von 30 kHz aufweisen, zusätzliche Kanäle angeordnet sind, die eine Bandbreite von 2 kHz aufweisen.

In Funk-Kommunikationssystemen werden Daten (beispielsweise Sprache, Bildinformationen oder andere Daten) als Signale mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Beim GSM (Global System for Mobile Communication) liegen die Trägerfrequenzen z.Z. im Bereich von 900, 1800 bzw. 1900 MHz. Ein Einsatz in anderen Frequenzbändern ist ebenso möglich.

Die Signale unterliegen bei ihrer Ausbreitung in einem Ausbreitungsmedium Störungen durch Rauschen. Durch Beugungen und Reflexionen durchlaufen Signalkomponenten verschiedene Ausbreitungswege und überlagern sich beim Empfänger und führen dort zu Auslöschungseffekten. Zum weiteren kommt es bei mehreren Signalquellen zu überlagerungen dieser Signale. Frequenzmultiplex (FDMA), Zeitlagenmultiplex (TDMA) oder ein als Codemultiplex (CDMA) bekanntes Verfahren dienen zur Unterscheidung der Signalquellen und damit zur Trennung der Signale beim Empfänger.

Das gegenwärtig existierende GSM-Mobilfunksystem ist ein Funk-Kommunikationssystem mit einer TDMA-Komponente zur Teilnehmerseparierung (Time Division Multiple Access). Gemäß einer Rahmenstruktur werden Nutzinformationen der Teilnehmerverbindungen in Zeitschlitzen übertragen. Die Übertragung erfolgt blockweise. Zur Modulation wird ein GMSK-Modulationsverfahren (gaussian minimum shift keying) mit einer Modulationsbandbreite von BT=0,3 verwendet. Die Modulationsbandbreite BT ist ein Bandbreiten/Zeit-Produkt, das nach GSM 05.04 Version 4.0.3, S.7-21, das Modulationsverfahren bezeichnet. Die Modulationsbandbreite BT ist ein Wert, der auf die Bandbreite B bezogen ist, die für die Übertragung eines Bits der Länge T zur Verfügung steht, siehe auch J.Biala, "Mobilfunk und intelligente Netze", Vieweg Verlag, 1995, S.104-106.

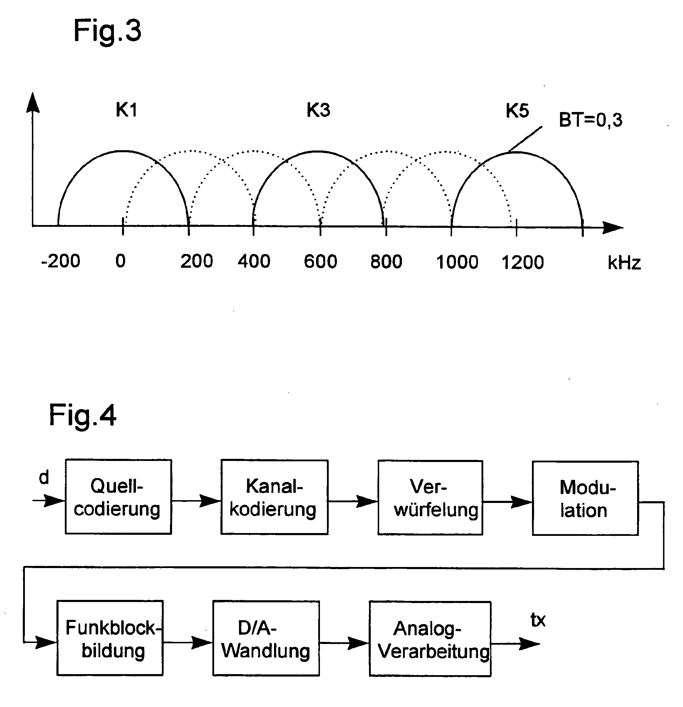

Aufgrund der spektralen Eigenschaften dieser Modulation können in der gleichen Funkzelle nicht zwei benachbarte Kanäle der Funkschnittstelle benutzt werden. Ein GSM-Kanal hat eine Bandbreite von 200 kHz, wobei aus FIG 3 ersichtlich ist, daß aufgrund der Nachbarkanalstörungen zumindest ein Kanal - der gestrichelt gezeichnete - nicht benutzt werden kann.

Durch die rasant ansteigende Zahl von Teilnehmern in den GSM-Mobilfunknetzen geraten die Netzbetreiber an die Grenzen der Kapazität ihrer Netze, da ihnen nur ein begrenztes Frequenzspektrum zur Verfügung steht.

Aufgabe der Erfindung ist es, die Kapazität eines GSM-Mobilfunknetzes zu erhöhen.

Diese Aufgabe wird durch das Verfahren mit den Merkmalen des Anspruchs 1 und die Funkstation mit den Merkmalen des Anspruchs 11 gelöst. Vorteilhafte Weiterbildungen sind den Unteransprüchen zu entnehmen.

Gemäß der Erfindung wird wenigstens ein Qualitätsparameter der übertragungsqualität der Datenübertragung einer Verbindung bestimmt und abhängig vom Qualitätsparameter die Modulationsbandbreite für die Verbindung verändert. Damit ist eine bedarfs- und situationsgerechte Anpassung der Bandbreite und damit der Nachbarkanalstörungen möglich. Die Bandbreite kann schrittweise reduziert werden, so daß in der gleichen Funkzelle oder in benachbarten Funkzellen aufgrund der geringeren Nachbarkanalstörungen die Kapazität durch Nutzung zusätzlicher Kanäle gesteigert wird.

Der Qualitätsparameter ist beispielsweise:
- eine Anzahl von Kanalkoeffizienten einer Kanalimpulsantwort für die Verbindung, die einen vorgebbaren Anteil der Gesamtenergie der Kanalimpulsantwort enthalten,
- ein Signalpegel,
- eine Anzahl von Detektionsfehlern (z.B. RXQUAL als eine GSM-standardisierte Darstellung der Bitfehlerrate).

Diese Größen lassen sich besonders vorteilhaft für Qualitätsaussagen nutzen, da sie bei der empfangsseitigen Auswertung der übertragenen Signale regelmäßig bestimmt und ausgewertet werden. Es ist ebenso möglich, eine Kombination dieser Größen zur Entscheidungsfindung zu benutzen. Die Detektionsfehler werden vorteilhafterweise durch Auswertung einer Trainingssequenz bestimmt. Somit ist der Qualitätsparameter besonders zuverlässig, da die Trainingssequenz empfangsseitig bekannt ist und ein korrekter Vergleichswert zur Verfügung steht.

Wird eine dynamische Kanalzuteilung benutzt, kann abhängig von der übertragungsqualität der Kanal mit reduzierter Bandbreite zugewiesen werden. Verschlechtert sich die Qualität, so wird die Modulationsbandbreite wieder erhöht. Wird dieses Verfahren auf mehrere Mobilstationen angewendet, so steigert dies die Gesamtkapazität innerhalb der Funkzelle, da unter den vielen Mobilstationen immer mehrere für eine Bandbreitenreduzierung geeignete Übertragungsbedingungen haben werden.

Eine Weiterbildung des erfindungsgemäßen Verfahrens zur Datenübertragung über eine Funkschnittstelle in einem GSM-Mobilfunksystem sieht sendeseitig für zu übertragende Daten eine CPM-Modulation von Sendesignalen vor, wobei eine. Bandbreite erzeugt wird, die schmaler ist als bei einer GMSK-Modulation mit einer Modulationsbandbreite von BT=0,3. Somit wird durch die Funkschnittstelle zumindest ein Kanal mit reduzierter Bandbreite bereitgestellt. Die Reduzierung der Modulationsbandbreite geht über die erlaubten Toleranzen nach GSM 05.04 Version 4.0.3, S.7-21 hinaus. Empfangsseitig wird eine Detektion der Daten durchgeführt. Diese Detektion kann ohne Unterscheidung von Kanälen mit unterschiedlichen Bandbreiten erfolgen. Letzteres gestattet auch eine Abwärtskompatibilität gegenüber bestehenden Mobilstationen.

Damit wird der stetigen Verbesserung der empfangsseitigen Detektoren und der Verkleinerung von Funkzellen Rechnung getragen, die auch bei geringerer Modulationsbandbreite eine ausreichende Qualität der Datenübertragung garantieren. Wird die Modulationsbandbreite verringert, können zusätzliche Kanäle innerhalb einer Funkzelle benutzt werden. Die Kapazität des GSM-Mobilfunknetzes wird wesentlich erhöht. Vorteilhafterweise wird eine GMSK-Modulation mit einer Modulationsbandbreite von BT<0,3 verwendet, jedoch sind auch andere CPM (continuous phase modulation)-Übertragungsverfahren nach C.E.Sundberg, "Continuous Phase Modulation", IEEE Communication Magazin, Vol.24, No.4, S.35-38, April 1986, im GSM-Mobilfunksystem einsetzbar.

Nach einer vorteilhaften Weiterbildung der Erfindung stellt die Funkschnittstelle Kanäle mit zumindest zwei unterschiedlichen Bandbreiten zur Datenübertragung bereit. Dies bedeutet, daß die bestehende Schaltungstechnik weiterhin benutzt werden kann, jedoch zusätzlich Sendeeinrichtungen für Kanäle mit reduzierter Bandbreite in die Funkstation eingebracht oder bestehende Sendeeinrichtungen auf die kleinere Modulationsbandbreite abgestimmt werden. Damit existieren zwei Kanaltypen mit unterschiedlicher Bandbreite nebeneinander.

Vorteilhafterweise werden durch die Kanäle mit reduzierter Bandbreite in einer Funkzelle benachbarte Frequenzbänder zur Datenübertragung verwendet. Die Nutzung benachbarter Funkkanäle erhöht die Kapazität der Funkschnittstelle auf nahezu das Doppelte. Versuche haben gezeigt, daß eine Modulationsbandbreite von etwa BT=0,15 eine gute Übertragungsqualität und eine Nutzung von benachbarten Frequenzbändern gestattet.

Besonders vorteilhaft kann das erfindungsgemäße Verfahren für Mikro-Zellen bzw. Innenräume angewendet werden. Diese haben einen verkleinerten Zellradius, so dat3 in der Regel die Übertragungsbedingungen ausreichend gut sind, um die reduzierte Modulationsbandbreite einzusetzen. Somit kann die Übertragungskapazität der Funkschnittstelle durch eine Anzahl von mindestens zwei Kanälen pro 400 kHz zusammenhängender Bandbreite erhöht werden, d.h. bei einer GSM-Bandbreite von 200 kHz wird auf einen Mindestabstand der Mittenfrequenzen von 600 kHz verzichtet.

Weiterhin ist es vorteilhaft, für eine Verbindung zumindest zwei Kanäle zuzuweisen, wobei zumindest ein Kanal eine reduzierte Bandbreite hat. Für diese Verbindung kann damit die Datenrate erhöht werden, was besonders für Datendienste (d.h. keine Sprachinformation) interessant ist.

Im folgenden wird die Erfindung anhand eines Ausführungsbeispiels bezugnehmend auf zeichnerische Darstellungen näher erläutert.

Dabei zeigen
- FIG 1: ein Blockschaltbild eines GSM-Mobilfunknetzes,
- FIG 2: eine zellulare Struktur des GSM-Mobilfunknetzes,
- FIG 3: eine spektrale Leistungsverteilung von Funkkanälen,
- FIG 4: eine sendeseitige Signalverarbeitung,
- FIG 5: Werte für die Nachbarkanalstörung in Abhängigkeit von der Modulationsart,
- FIG 6+7: spektrale Leistungsverteilungen von Funkkanälen mit unterschiedlicher Modulationsbandbreite,
- FIG 8: ein Blockschaltbild einer Funkstation, und
- FIG 9: ein Ablaufdiagramm für die Wahl der Modulationsbandbreite.

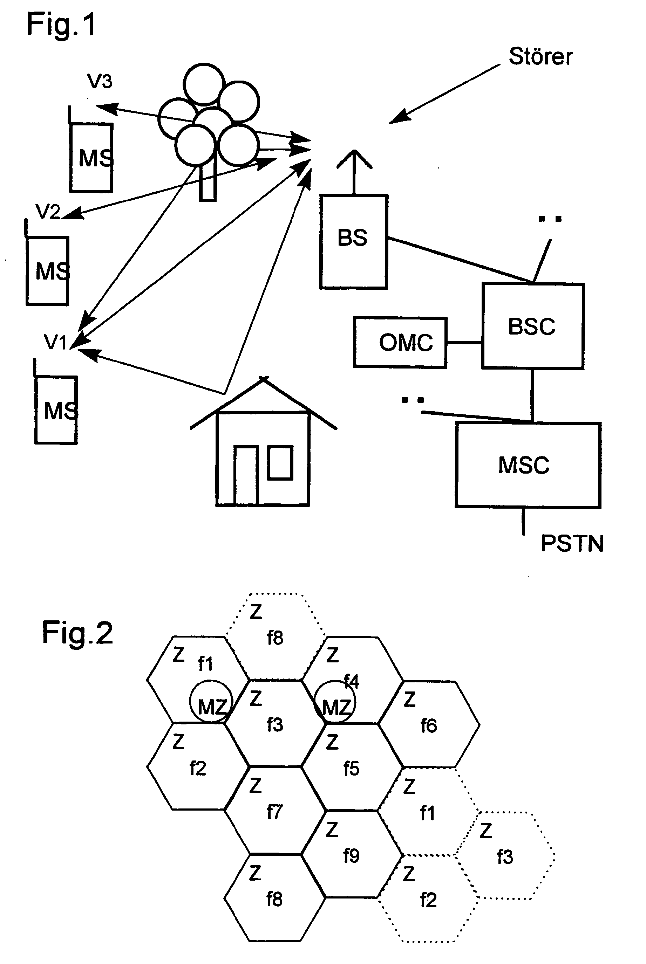

Das in FIG 1 dargestellte GSM-Mobilfunksystem besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einem Basisstationscontroller BSC verbunden. Jeder Basisstationscontroller BSC ermöglicht wiederum eine Verbindung zu zumindest einer Basisstation BS. Eine solche Basisstation BS ist eine Funkstation, die über eine Funkschnittstelle eine Verbindung zu weiteren Funkstationen, d.h. zu Mobilstationen MS oder anderen Datenendgeräte, aufbauen kann.

In FIG 1 sind beispielhaft Verbindungen V1, V2, V3 zur Übertragung von Nutzinformationen und Signalisierungsinformationen zwischen Mobilstationen MS und einer Basisstation BS dargestellt. Ein Operations- und Wartungszentrum OMC realisiert Kontroll- und Wartungsfunktionen für das GSM-Mobilfunksystem bzw. für Teile davon.

Der Stand der Technik bezüglich der Bandbreitennutzung ist in den Figuren 2 und 3 dargestellt. Ein GSM-Mobilfunknetz ist zellular untergliedert. Ein Funkbereich Z, MZ einer Basisstation BS bildet eine Zelle, in der individuelle Trägerfrequenzen f1 bis f9 für die Funkkanäle zu und von den Mobilstationen MS zur Verfügung stehen. Es ist dabei zu beachten, daß üblicherweise eine Gruppierung für die Frequenzverteilung gewählt wird, die einen ausreichenden Abstand zwischen zwei Zellen Z mit gleicher Trägerfrequenz f1 garantiert. Dieses sogenannte Frequenz-Reuse-Muster nach FIG 2 gruppiert jeweils 9 Trägerfrequenzen, so daß zumindest ein Abstand von zwei Zellen Z zwischen Zellen mit einer gemeinsam benutzten Trägerfrequenz f1 besteht. Dadurch werden die Nachbarzellenstörungen minimiert.

Die Verhältnisse innerhalb einer Zelle Z, MZ sind in FIG 3 dargestellt, wobei Kanäle K1, K3, K5 jeweils eine Bandbreite von 200 kHz haben, jedoch die spektrale Verteilung der Sendeleistung über diese Bandbreite von 200 kHz hinausreicht. Deshalb ist der Kanalabstand innerhalb einer Zelle mindestens 400 kHz innerhalb einer Zelle. Dies gilt für die im GSM-Standard empfohlene Modulationsbandbreite BT=0,3. Die Leistung der Signale eines Kanals ist bei der Mittenfrequenz des benachbarten Kanals (+/- 200 kHz) um ca. 35 dB abgeklungen.

Eine sendeseitige Signalverarbeitung für zu übertragende Daten d ist in FIG 4 schematisch dargestellt. Es findet eine Quellkodierung statt, d.h. bei einer Sprachübertragung wird die Sprachinformation in Form von Datensymbolen kodiert. Es folgt eine Kanalkodierung, die speziell für die Datenübertragung über die Funkschnittstelle eine erhöhte Störsicherheit bewirkt.

Weiterhin werden die Sendesignale verwürfelt, um Einflüsse kurzzeitiger Störungen empfangsseitig besser ausgleichen zu können. Es schließt sich eine Modulation an, auf die im folgenden noch genauer eingegangen wird. Während eines Funkblockbildens werden nicht nur die zu übertragenden Daten, sondern auch Symbole einer Trainingssequenz in einen Funkblock eingebettet, so daß mit Hilfe der Trainingssequenz empfangsseitig eine Kanalschätzung zur Bestimmung von Kanalimpulsantworten und daraufhin eine kanalangepaßte Detektion erfolgt. Die Symbole des Funkblocks werden digital/analoggewandelt und durch eine analoge Signalverarbeitung ins Frequenzband der Trägerfrequenz umgesetzt, verstärkt und gefiltert. Daraufhin kann das hochfrequente Signal abgestrahlt werden.

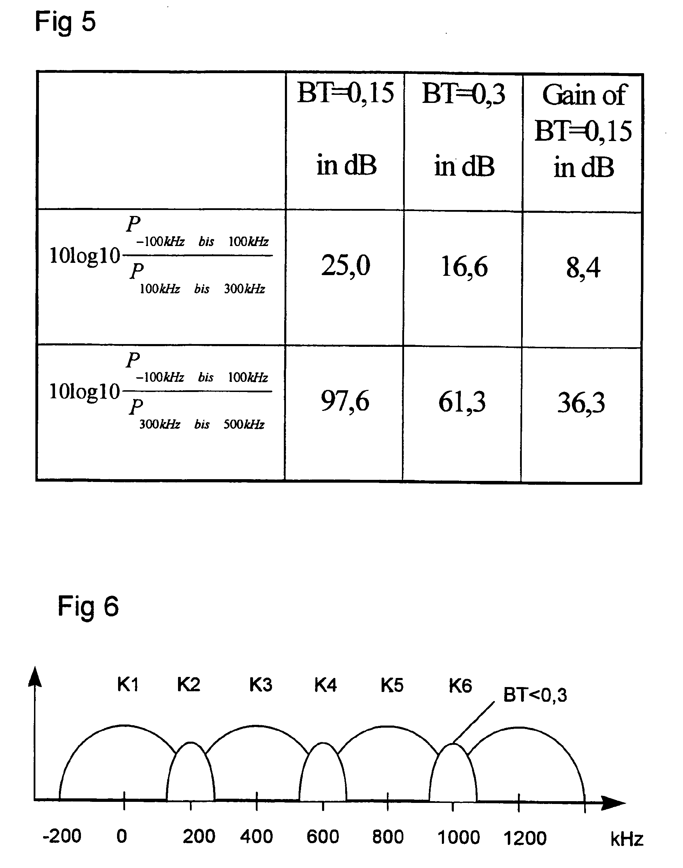

Die Modulation wird gemäß der Erfindung dahingehend abgewandelt, daß zwar weiterhin eine MSK-Modulation mit gausscher Filterung benutzt wird, jedoch die Modulationsbandbreite BT auf Werte kleiner 0,3 reduziert wird. FIG 5 zeigt eine Darstellung der Energieverhältnisse für einen Kanal (-100 bis +100 kHz) im Verhältnis zum benachbarten (+100 bis +300 kHz) bzw. zu übernächsten (+300 bis +500 kHz) Kanal. Hierbei zeigt sich, daß mit einer Modulationsbandbreite von BT=0,15 ein Gewinn von 8,4 dB erzielt wird, d.h. die Nachbarkanalstörung ist wesentlich geringer.

Trotz der geringeren Modulationsbandbreite BT ist die empfangsseitige Detektion möglich, und dies mit herkömmlichen Mobilstationen MS. Bei einer Modulationsbandbreite von BT=0,3 sind Intersymbolinterferenzen über zwei Symbole zu beobachten, währenddessen bei BT=0,15 über vier Symbole Interferenzen auftreten. Da ein üblicher GSM-Empfänger Intersymbolinterferenzen über fünf Symbole ausgleichen kann, ist auch eine Datenübertragung mit einer Modulationsbandbreite von beispielsweise BT=0,15 abwärtskompatibel. Auch Modulationsbandbreiten zwischen BT=0,3 und BT=0,15 oder etwas unter BT=0,15 erlauben eine problemlose Detektion.

Werden sendeseitig Kanäle mit geringerer Modulationsbandbreite BT geschaffen, so ergibt sich beispielsweise eine spektrale Verteilung nach FIG 6. Zwischen die Kanäle mit einer herkömmlichen Modulationsbandbreite von BT=0,3 werden Funkkanäle K2, K4, K6 mit einer Modulationsbandbreite von BT<0,3 eingefügt. Aufgrund der spektralen Eigenschaften dieser zusätzlichen Funkkanäle K2, K4, K6 sind die Nachbarkanalstörungen begrenzt, so daß die Datenübertragung in den Funkkanälen K1, K3, K5 nicht merklich beeinträchtigt wird.

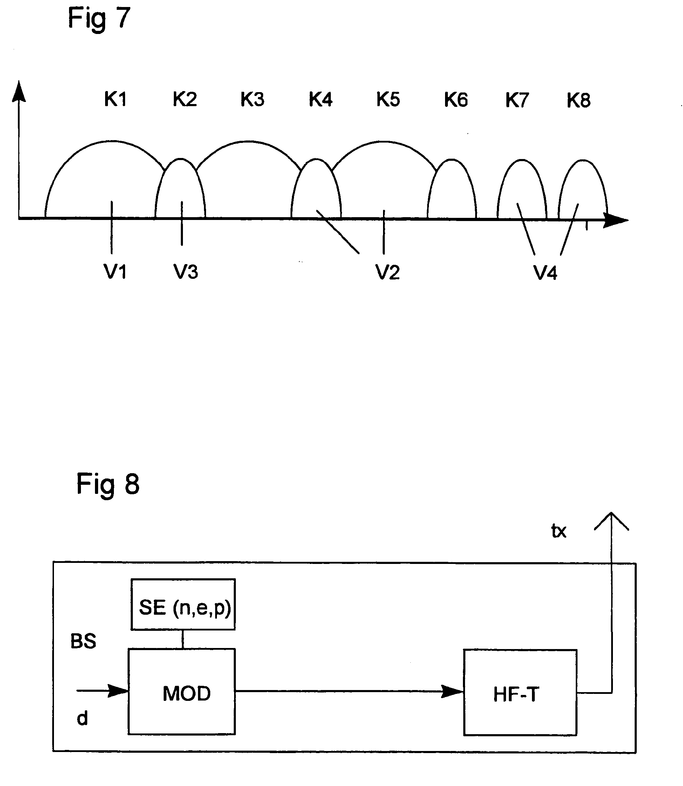

Die Möglichkeiten, die sich aus der reduzierten Bandbreite ergeben, werden anhand von FIG 7 erläutert.

Für Anwendungen in Mikrozellen bzw. in Innenräumen (indoor) ist das Problem der Nachbarkanalstörungen besonders drückend. Da jedoch durch die kurzen Entfernungen ein hoher Empfangspegel vorliegt und die Mehrwegeausbreitung begrenzt ist, ermöglicht die erfindungsgemäße Bandbreitenreduzierung eine Kapazitätserhöhung, siehe Verbindung V4 in FIG 7.

Besonders für Datenverbindungen, bei denen die zu übertragenden Daten keine Sprachinformationen sind, kann erfindungsgemäß die Datenrate erhöht werden, indem zwei Kanäle K4 und K5 bzw. K7 und K8 einer Verbindung V2, V4 zugewiesen werden. Dabei kann die Verbindung asymmetrisch gestaltet sein. In Abwärtsrichtung wird eine höhere Datenrate durch Zuteilung von zwei oder mehr Kanälen erreicht. Werden zwei benachbarte Funkkanäle K4 und K5 für eine Verbindung V2 benutzt, dann sind die Leistungen beider Funkkanäle stark miteinander gekoppelt, so daß davon ausgegangen werden kann, daß die Leistungen der beiden Funkkanäle relativ zueinander gleichbleiben. So werden Nachbarkanalstörungen stark reduziert.

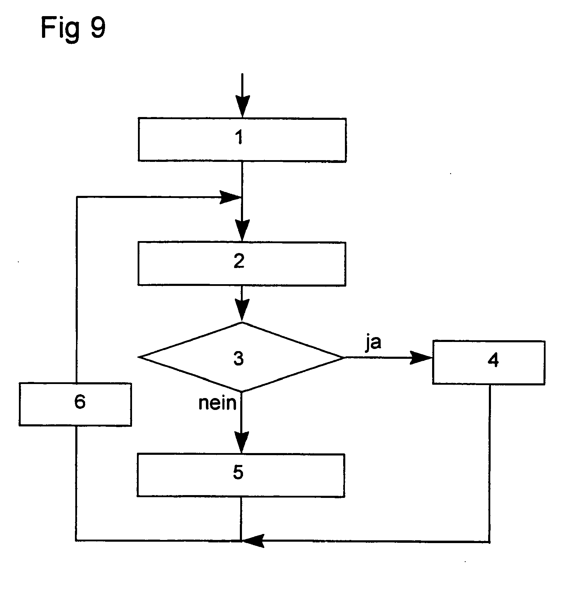

Vorteilhafterweise wird die Einstellung der Modulationsbandbreite BT für die zu übertragenden Daten d durch eine Steuereinrichtung SE der Basisstation BS nach FIG 8 durchgeführt. Die Steuereinrichtung SE steuert eine Modulationsseinrichtung MOD, die die Sendesignale tx vor der hochfrequenten Verarbeitung in der Hochfrequenzeinrichtung HF-T moduliert. Die Steuerung ist adaptiv und beruht auf einer Auswertung von Qualitätsparametern n, e, p bezüglich der Empfangsverhältnisse. Nach FIG 9 wird im Schritt 1 ein Verbindungsaufbau mit einer Modulationsbandbreite BT=0,3 durchgeführt und dabei die Übertragungsqualität anhand eines Qualitätsparameters p, n, e bestimmt. Dies kann bei der Auswertung eines Zugriffsfunkblocks (random access burst) oder eines normalen Funkblocks (normal burst) erfolgen.

Der dabei bestimmte Qualitätsparameter p, n, e ist durch
- eine Anzahl n von Kanalkoeffizienten einer Kanalimpulsantwort für die Verbindung, die einen vorgebbaren Anteil der Gesamtenergie der Kanalimpulsantwort enthalten,
- einen Signalpegel p,
- eine Anzahl e von Detektionsfehlern
bezeichnet. Diese Qualitätsparameter p, n, e werden bei der empfangsseitigen Auswertung der übertragenen Signale regelmäßig bestimmt und ausgewertet werden (Schritt 2 in FIG 9). Es ist ebenso möglich, eine Kombination dieser Größen zur Entscheidungsfindung zu benutzen. Die Detektionsfehler werden vorteilhafterweise durch Auswertung einer Trainingssequenz bestimmt .

Für die Entscheidung nach Schritt 3 in FIG 9 muß beispielsweise die Anzahl n kleiner als vier, der Signalpegel p 4 dB über einem Referenenz-Sensitivitätspegel und die Anzahl e der Detektionsfehlern pro Trainingssequenz kleiner als zwei sein, damit eine Modulationsbandbreite von BT<0,3 für die Verbindung zugewiesen werden kann (Schritt 4 in FIG 9). Werden die Qualitätsparameter p, n, e nicht eingehalten, so bleibt in Schritt 5 die Modulationsbandbreite von BT=0,3 bestehen. Daraufhin werden die Daten im Schritt 6 moduliert und als Funkblock abgestrahlt. Auch während der Verbindung wird die Übertragungsqualität überwacht und damit die Modulationsbandbreite BT verändert bzw. zusätzliche Funkkanäle einer Verbindung zugewiesen oder wieder entzogen. Die Modulationsbandbreite BT kann auch schrittweise verringert werden, wobei dann mehrere Entscheidungsstufen nötig sind.

Es ist als besonders vorteilhaft anzusehen, einer Verbindung zwei benachbarte Funkkanäle K4, K5 zuzuweisen, da somit wirtschaftlich herstellbare Empfänger einsetzbar sind. Durch moderne Analog/Digital-Wandler und erweiterte Filterbandbreiten können empfangsseitig bei ansonsten im wesentlichen gleichbleibender Hochfrequenzeinrichtung zwei Kanäle ohne großen zusätzlichen Aufwand parallel verarbeitet werden.

## Patentansprüche

1. Verfahren zur Datenübertragung über eine Funkschnittstelle in einem GSM-Mobilfunksystem, bei dem
- sendeseitig für zu übertragende Daten (d) einer Verbindung eine CPM-Modulation von Sendesignalen (tx) durchgeführt wird, die eine erste Modulationsbandbreite aufweist, so dass für die Verbindung ein Kanal (K1) mit einer ersten Bandbreite verwendet wird,
- wenigstens ein Qualitätsparameter (p, n, e) der Übertragungsqualität der Datenübertragung der Verbindung bestimmt wird, und
- abhängig von dem wenigstens einen Qualitätsparameter (p, n, e) für die Verbindung eine zweite, gegenüber der ersten Modulationsbandbreite verringerte Mödulationsbandbreite gewählt wird, so dass für die Verbindung nachfolgend ein Kanal (K2) mit einer zweiten Bandbreite verwendet wird.

2. Verfahren nach Anspruch 1, bei dem
als der wenigstens eine Qualitätsparameter (n) die Anzahl von Kanalkoeffizienten einer Kanalimpulsantwort bestimmt wird, die einen vorgebbaren Anteil der Gesamtenergie der Kanalimpulsantwort enthalten.

3. Verfahren nach Anspruch 1 oder 2, bei dem
als der wenigstens eine Qualitätsparameter (p) ein Signalpegel bestimmt wird.

4. Verfahren nach einem der vorstehenden Ansprüche, bei dem als der wenigstens eine Qualitätsparameter (e) eine Anzahl von Detektionsfehlern bestimmt wird.

5. Verfahren nach Anspruch 4, bei dem
die Detektionsfehler durch Auswertung einer Trainingssequenz bestimmt werden.

6. Verfahren nach einem der vorstehenden Ansprüche, bei dem eine GMSK-Modulation mit einer Modulationsbandbreite von BT<0,3 als die zweite Modulationsbandbreite und eine GMSK-Modulation mit einer Modulationsbandbreite von BT=0,3 als die erste Modulationsbandbreite verwendet wird.

7. Verfahren nach einem der vorstehenden Ansprüche, bei dem in einer Funkzelle (Z) des GSM-Mobilfunksystems benachbarte Frequenzbänder (K1, K2) zur Datenübertragung verwendet werden.

8. Verfahren nach einem der vorstehenden Ansprüche, bei dem die zweite Modulationsbandbreite BT=0,15 beträgt.

9. Verfahren nach einem der vorstehenden Ansprüche, bei dem für Mikro-Zellen (MZ) oder Innenraum-Anwendungen eine Übertragungskapazität der Funkschnittstelle durch eine Anzahl von mindestens zwei Kanälen pro 400 kHz zusammenhängender Bandbreite erhöht wird.

10. Verfahren nach einem der vorstehenden Ansprüche, bei dem der Verbindung (V2) zumindest zwei Kanäle (K4, K5) zugewiesen werden, wobei zumindest einer der zumindest zwei Kanäle (K4) eine reduzierte Bandbreite aufweist.

11. Funkstation (BS) zur Datenübertragung über eine Funkschnittstelle in einem GSM-Mobilfunksystem, enthaltend
- eine Modulationseinrichtung (MOD) für eine CPM-Modulation von Sendesignalen (tx), die zu übertragende Daten (d) einer Verbindung enthalten, mit einer ersten Modulationsbandbreite, welche einem Kanal (K1) mit einer ersten Bandbreite entspricht,
- eine Steuereinrichtung (SE) zum Auswählen einer zweiten Modulationsbandbreite der Modulationseinrichtung (MOD) für eine nachfolgende Übertragung von Daten der Verbindung in Abhängigkeit von wenigstens einem bestimmten Qualitätsparameter (p, n, e) der Übertragungsqualität der Datenübertragung der Verbindung, wobei die zweite Modulationsbandbreite eine gegenüber der ersten Modulationsbandbreite verringerte Modulationsbandbreite aufweist, und
- eine Hochfrequenzeinrichtung (HF-T) zum Senden der modulierten Sendesignale (tx) der Verbindung zunächst in dem Kanal (K1) mit der ersten Modulationsbandbreite und nachfolgend in einem Kanal (K2) mit der zweiten Modulationsbandbreite.

## Claims

1. Method for data transmission by way of a radio interface in a GSM mobile radio system, wherein
- CPM modulation of transmit signals (tx) is carried out on the transmit side for data (d) of a connection to be transmitted, said CPM modulation having a first modulation bandwidth, such that a channel (K1) with a first bandwidth is used for the connection,
- at least one quality parameter (p, n, e) is determined for the transmission quality of the data transmission of the connection and
- a second modulation bandwidth, which is smaller than the first, is selected for the connection as a function of the at least one quality parameter (p, n, e), such that a channel (K2) with a second bandwidth is then used for the connection.

2. Method according to claim 1, wherein
the number of channel coefficients of a channel impulse response is determined as the at least one quality parameter (n), containing a predeterminable proportion of the overall energy of the channel impulse response.

3. Method according to claim 1 or 2, wherein
a signal level is determined as the at least one quality parameter (p).

4. Method according to one of the preceding claims, wherein a number of detection errors is determined as the at least one quality parameter (e).

5. Method according to claim 4, wherein
the detection errors are determined by evaluating a training sequence.

6. Method according to one of the preceding claims, wherein a GMSK modulation with a modulation bandwidth of BT < 0.3 is used as the second modulation bandwidth and a GMSK modulation with a modulation bandwidth of BT = 0.3 is used as the first modulation bandwidth.

7. Method according to one of the preceding claims, wherein adjacent frequency bands (K1, K2) in a radio cell (Z) of the GSM mobile radio system are used for data transmission.

8. Method according to one of the preceding claims, wherein the second modulation bandwidth is BT = 0.15.

9. Method according to one of the preceding claims, wherein for micro-cells (MZ) or indoor spaces the transmission capacity of the radio interface is increased by a number of at least two channels per 400 kHz of coherent bandwidth.

10. Method according to one of the preceding claims, wherein at least two channels (K4, K5) are allocated to the connection (V2), with at least one of the at least two channels (K4) having a reduced bandwidth.

11. Radio station (BS) for data transmission by way of a radio interface in a GSM mobile radio system containing
- a modulation facility (MOD) for CPM modulation of transmit signals (tx), which contain data to be transmitted (d) of a connection, with a first modulation bandwidth, which corresponds to a channel (K1) with a first bandwidth,
- a control facility (SE) for selecting a second modulation bandwidth of the modulation facility (MOD) for subsequent transmission of data of the connection as a function of at least one specific quality parameter (p, n, e) for the transmission quality of the data transmission of the connection, the second modulation bandwidth having a modulation bandwidth that is smaller than the first modulation bandwidth and
- a high-frequency facility (HF-T) for transmitting the modulated transmit signals (tx) of the connection first in the channel (K1) with the first modulation bandwidth and then in a channel (K2) with the second modulation bandwidth.

## Revendications

1. Procédé pour la transmission de données via une interface radio dans un système de radiocommunication mobile GSM, procédé dans lequel
- on réalise, côté émission, pour des données (d) à transmettre d'une connexion, une modulation CPM de signaux d'émission (tx) qui présente une première largeur de bande de modulation, si bien que l'on utilise pour la connexion un canal (K1) avec une première largeur de bande,
- on détermine au moins un paramètre de qualité (p, n, e) de la qualité de transmission de la transmission des données de la connexion, et
- selon ledit au moins un paramètre de qualité (p, n, e), on choisit pour la connexion une largeur de bande de modulation diminuée par rapport à la première largeur de bande de modulation, si bien que l'on utilise ensuite un canal (K2) avec une seconde largeur de bande pour la connexion.

2. Procédé selon la revendication 1, dans lequel
on détermine en tant que ledit au moins un paramètre de qualité (n) le nombre de coefficients de canal d'une réponse impulsionnelle de canal, contenant une partie prédéfinissable de l'énergie totale de la réponse impulsionnelle de canal.

3. Procédé selon la revendication 1 ou 2, dans lequel
on détermine en tant que ledit au moins un paramètre de qualité (p) un niveau de signal.

4. Procédé selon l'une des revendications précédentes, dans lequel
on détermine en tant que ledit au moins un paramètre de qualité (e) un nombre d'erreurs de détection.

5. Procédé selon la revendication 4, dans lequel
on détermine les erreurs de détection en évaluant une séquence d'entraînement.

6. Procédé selon l'une des revendications précédentes, dans lequel
on utilise une modulation GMSK avec une largeur de bande de modulation de BT<0,3 en tant que ladite seconde largeur de bande de modulation et une modulation GMSK avec une largeur de bande de modulation de BT=0,3 en tant que ladite première largeur de bande de modulation.

7. Procédé selon l'une des revendications précédentes, dans lequel
on utilise pour la transmission des données des bandes de fréquences voisines (K1, K2) d'une cellule radio (Z) du système de radiocommunication mobile GSM.

8. Procédé selon l'une des revendications précédentes, dans lequel
la seconde largeur de bande de modulation est de BT=0,15.

9. Procédé selon l'une des revendications précédentes, dans lequel
on augmente pour des micro-cellules (MZ) ou des applications à l'intérieur, une capacité de transmission de l'interface radio par un nombre d'au moins deux canaux par 400 kHz de largeur de bande contiguë.

10. Procédé selon l'une des revendications précédentes, dans lequel
on alloue au moins deux canaux (K4, K5) à la connexion (V2), au moins l'un desdits au moins deux canaux (K4) présentant une largeur de bande réduite.

11. Station radio (BS) pour la transmission de données via une interface radio dans un système de radiocommunication mobile GSM, comprenant
- un dispositif de modulation (MOD) pour une modulation CPM de signaux d'émission (tx) contenant des données (d) à transmettre d'une connexion, avec une première largeur de bande de modulation correspondant à un canal (K1) avec une première largeur de bande,
- un dispositif de commande (SE) pour sélectionner une seconde largeur de bande de modulation du dispositif de modulation (MOD) pour une transmission suivante de données de la connexion en fonction d'au moins un paramètre de qualité déterminé (p, n, e) de la qualité de transmission de la transmission des données de la connexion, la seconde largeur de bande de modulation présentant une largeur de bande de modulation diminuée par rapport à la première largeur de bande de modulation, et
- un dispositif à haute fréquence (HF-T) pour émettre les signaux d'émission (tx) modulés de la connexion d'abord dans le canal (K1) avec la première largeur de bande de modulation et ensuite dans un canal (K2) avec la seconde largeur de bande de modulation.
